# EUROPEAN PATENT SPECIFICATION

(11) **EP 1 513 316 B1**
(45) Date of publication and mention of the grant of the patent: **24.03.2010**
(21) Application number: 04020643.5
(22) Date of filing: 31.08.2004
(51) Int. Cl.: H04L 29/06, H04L 12/00

(54) **Communication system and communication control method**
Übertragungssystem und Verfahren zur Kommunikationssteuerung
Système de communication et méthode de commande de communication

(30) Priority: 04.09.2003 JP 2003313282
(43) Date of publication of application: 09.03.2005
(73) Proprietor: NTT DoCoMo, Inc., Tokyo 100-6150 (JP)
(72) Inventor: Nishida, Katsutoshi, NTT DoCoMo, Inc., Chiyoda-ku, Tokyo 100-6150 (JP); Okagawa, Takatoshi, NTT DoCoMo, Inc., Chiyoda-ku Tokyo 100-6150 (JP)
(74) Representative: Viering, Jentschura & Partner

(56) References cited:
- EP-A- 1 161 032
- WO-A-01/43395
- WO-A-03/043226
- KIN WENG NG ET AL: "An IPv6-based location management scheme for client-server computing over mobile data networks" WIRELESS COMMUNICATIONS AND NETWORKING CONFERENCE, 1999. WCNC. 1999 IEEE NEW ORLEANS, LA, USA 21-24 SEPT. 1999, PISCATAWAY, NJ, USA,IEEE, US, 21 September 1999 (1999-09-21), pages 525-529, XP010353840 ISBN: 0-7803-5668-3
- KAZUHIRO OKANOUE TOMOKI OHSAWA NEC CORP: "IP Mobility Support with IP-squared(IP2)" IETF STANDARD-WORKING-DRAFT, INTERNET ENGINEERING TASK FORCE, IETF, CH, 22 February 1996 (1996-02-22), XP015033433 ISSN: 0000-0004

## Description

### BACKGROUND OF THE INVENTION

### Field of the Invention

The present invention relates to a communication system and a communication control method.

### Related Background Art

Recently, Mobile-IPv6 is actively studied and this Mobile-IPv6 is described, for example, in Non-patent Document 1 below and others. This Mobile-IPv6 technology enables a terminal to migrate to another link while maintaining its communication state, and to perform communication using an optimal communication route. This makes it feasible to realize reduction of packet transfer delay and jitter due to path redundancy, and effective utilization of network resources.

Specifically, in the Mobile-IPv6 technology, a care-of address is assigned to a terminal connected to another link, and this care-of address and the original home address are used in an associated state, whereby a communication state with a correspondent terminal can be maintained. When the care-of addresses are used as packet source and destination addresses, communication can be done through an optimal route without passage via a home agent (HA).

In the Mobile-IPv6 technology, a Binding Update message (hereinafter abbreviated to "BU message") is transmitted in order to notify the correspondent terminal of the home address and care-of address, and keys for authentication of the BU message are exchanged between the terminal of interest and the correspondent terminal by use of a technique called Return Routability, in order to make confirmation of validity of the BU message and avoid reception of an unauthorized BU message. Return Routability is, specifically, a method of transferring packets onto two routes: a packet transfer route via HA managing the address information of the terminal of interest with use of the home address; and a communication route as an optimal route to the correspondent terminal with use of the care-of address, and receiving responses through the respective routes. When it is confirmed that the received responses are from the same correspondent, the aforementioned authentication key is generated based on the information elements of the respective response packets. After this authentication key is generated, the terminal of interest sends a BU message to the correspondent terminal and the correspondent terminal retains correspondence information (Binding information) between the home address and the care-of address. In a state in which the correspondent terminal does not retain the Binding information, communication is performed through the route via the HA of the terminal of interest. In general the route via HA is redundant and the communication using such a route causes increase in the packet transfer delay and jitter.

Recently, IMT-2000 as a third-generation mobile communication system has been started and the IP-based mobile communication networks are actively studied. As one of such mobile communication networks, the Inventors proposed a technology called IP² (IP-based IMT Network Platform, which will be referred to hereinafter as "IP square") described, for example, in Non-patent Document 2 below. This IP square technology is characterized in that such control mechanisms as mobility control and QoS control are separated as NCL (Network Control Layer) from TNL (Transport Network Layer) composed of router devices. In this IP square technology, TNL can concentrate on various processes in packet units including packet forwarding, so that fast processing can be achieved. The IP square technology adopts a unique mobility support protocol and, even if an IP square terminal changes its access router to another, the communication state before the change is maintained thereby.
[Non-patent Document 1] David B. Johnson, Charles E. Perkins, Jari Arkko, "Mobility Support in IPv6," draft-ietf-mobileip-ipv6-22 (work in progress), May 26, 2003
[Non-patent Document 2] Takatoshi Okada and three other persons, "IP packet routing mechanisms in IP2," Technical Report of THE INSTITUTE OF ELECTRONICS, INFORMATION AND COMMUNICATION ENGINEERS, Nov. 2002, MoMuC-2002, No. 63
[Non-patent Document 3] Masafumi Watari, Ryuji Wakikawa, Jun Murai, "Route Optimization in Networks with Mobile IPv6," DICOM02003, June 2003
[Patent Document 1] Japanese Patent Application Laid-Open No. 2002-185520

WO 01/43395 A describes a system and a method for performing routing using location information of an IP terminal in a mobile IP telephony network. When a call is originated from an IP terminal to another subscriber it is checked whether location information of the IP terminal is required for the call. In case location information is required, the location information is added to the call setup data. Then, a destination address is determined on the basis of the call setup data and the location information. Finally, the call is routed to the determined destination address..

### SUMMARY OF THE INVENTION

However, a terminal in a network to which the aforementioned IP square technology is applied (hereinafter referred to as an "IP square terminal") does not interpret the above-described protocol of Mobile-IPv6 and is thus unable to make an appropriate response upon reception of the packets for Return Routability from a terminal in a Mobile-IPv6 network (the terminal will be referred to hereinafter as a "Mobile-IP terminal") connected to the network to which the IP square technology is applied. In this case, the Mobile-IP terminal sends no BU message to the IP square terminal, so that the IP square terminal and Mobile-IP terminal fail to maintain communication through an optimal communication route. Therefore, the communication is switched to communication through a redundant route via HA. The communication using such a route will cause increase in the packet transfer delay and jitter.

Non-patent Document 3 above describes a technology of placing a Binding Proxy Agent (BPA) between the terminal not interpreting the Mobile-IPv6 protocol, and the Mobile-IP terminal. This BPA is able to make an appropriate response to the packets for Return Routability transmitted from the Mobile-IP terminal. The BPA performs the exchange of the authentication keys and the reception of the BU message transmitted from the Mobile-IP terminal, thereby retaining the Binding information. It enables the communication state to be maintained between the terminal not interpreting the Mobile-IPv6 protocol, and the Mobile-IP terminal. However, this BPA needs to receive the two types of packets sent from the Mobile-IP terminal by Return Routability, and thus has to be located near the terminal not interpreting the Mobile-IPv6 protocol. Therefore, an increase in the number of access routers as interfaces between Mobile-IP terminals and the network will require a large number of BPAs. Since the BPA also performs a BU message storing process, a packet reconstructing process, etc. as well as the responding process to Return Routability, it tends to be overloaded, so as to cause a situation of packet delay or the like.

The above-stated technology of placing BPA is based on the assumption that existing IPv6 fixed terminals are terminals not interpreting the Mobile-IPv6 protocol. For this reason, where a terminal not interpreting the Mobile-IPv6 protocol is a mobile terminal like the IP square terminal, the following problem will arise. Namely, when the IP square terminal moves so as to change its BPA to another during communication with the Mobile-IP terminal, the BPA used after the movement of the terminal stores no Binding information about the Mobile-IP terminal, and thus the communication route between the Mobile-IP terminal and the IP square terminal is switched to the route via HA. Then the BPA again responds to the packets for Return Routability transmitted from the Mobile-IP terminal, whereupon the communication is performed through the optimal route between the Mobile-IP terminal and the IP square terminal. In this manner, the communication is switched to that through the communication route via HA every time the IP square terminal moves to cause the change of BPA. This switching will result in such situations as packet loss, increase of packet transfer delay and jitter, and so on. Since signaling due to Return Routability occurs at BPA every time each of IP square terminals moves so as to cause the change of BPA, it will result in facilitating the delay of packet and the like.

Patent Document 1 discloses the technology about HA which transmits the BU message received from the Mobile-IP terminal, to a gateway router in the network to which the Mobile-IP terminal is connected. In this technology, the Mobile-IP terminal is connected through the gateway router to the terminal not interpreting the Mobile-IPv6 protocol, and this gateway router retains the Binding information of the Mobile-IP terminal. Therefore, even with a change of the care-of address of the Mobile-IP terminal, the Mobile-IP terminal and the terminal not interpreting the Mobile-IPv6 protocol can maintain the route through the gateway router. However, the communication via the aforementioned gateway router is also maintained even if the Mobile-IP terminal moves so as to change the connected network to another. In this case the communication is performed through a redundant route between the Mobile-IP terminal and the terminal not interpreting the Mobile-IPv6 protocol. When the terminal not interpreting the Mobile-IPv6 protocol is a mobile terminal like the IP square terminal, the packet is also limited to the route containing the gateway router, so that the communication is carried out through a redundant route. In such cases, there will also arise the problem of increase in the packet transfer delay and jitter or the like.

The present invention has been accomplished in order to solve the above problem and an object of the invention is to provide a communication system and a communication control method capable of maintaining the optimized communication route upon a connection with an external network.

A communication system according to the present invention is described in claim 1.

This communication system is applied to the second network, and comprises the second terminal repeater, the location information management device, and the route optimization device. The route optimization device receives the route optimization information from the first communication terminal and receives the location information of the second terminal repeater from the location information management device. Then the route optimization device transmits the route optimization information to the second terminal repeater, based on the location information of the second terminal repeater thus received, whereby the route optimization information is transferred to the second terminal repeater to which the second communication terminal is connected. This enables the second terminal repeater to relay the packet transmitted and received between the first communication terminal and the second communication terminal, through the optimal route. Namely, the second terminal repeater rewrites at least one of a source address and a destination address in a header of each packet transmitted and received between the first communication terminal and the second communication terminal, whereby it becomes feasible to forward packets directly to both the first and second communication terminals. In the communication system according to the present invention, where the first communication terminal changes its first terminal repeater to another and where the second communication terminal is a terminal not interpreting the Mobile-IPv6 protocol, the second terminal repeater directly transfers the packets transmitted and received between the first communication terminal and the second communication terminal, so that communication is always performed through an optimized route.

A preferred configuration is one comprising a plurality of second terminal repeaters, wherein a protocol of, even if the second communication terminal changes the second terminal repeater in connection to another, maintaining a communication state before the change is applied to the second network, wherein when the second terminal repeater is connected to the second communication terminal, the second terminal repeater transmits location update information containing its own location information to the location information management device, wherein the location information management device transmits the location update information received from the second terminal repeater to the route optimization device, and wherein when the route optimization device receives the location update information from the location information management device, the route optimization device transmits the route optimization information to the second terminal repeater having transmitted the location update information. In this configuration, even in a case where the second communication terminal changes its second terminal repeater to another, the second terminal repeater directly transfers a packet transmitted and received between the first communication terminal and the second communication terminal, whereby communication can always be performed through an optimized route between the first communication terminal and the second communication terminal.

Another preferred configuration is one further comprising a boundary transfer device placed at a boundary location between the first network and the second network, wherein the boundary transfer device decapsulates an encapsulated packet which the route optimization device transmits to the first communication terminal. In this configuration, the packet transmission from the route optimization device to the boundary transfer device is carried out more securely.

Another preferred configuration is one wherein the boundary transfer device receives the route optimization information transmitted from the first communication terminal and transfers the route optimization information to the route optimization device, and wherein the route optimization device receives the route optimization information from the first communication terminal via the boundary transfer device. In this configuration, it is feasible to significantly avoid a situation in which the route optimization information arrives at the route optimization device through a redundant route.

Another preferred configuration is one wherein the second terminal repeater receives the route optimization information transmitted from the first communication terminal and transfers the route optimization information to the route optimization device, and wherein the route optimization device receives the route optimization information from the first communication terminal via the second terminal repeater. In this configuration, even in a case where the route optimization information is transmitted to the second communication terminal, the route optimization device is able to receive the route optimization information with certainty.

Another preferred configuration is one wherein the first communication terminal is a communication terminal to which the Mobile-IPv6 protocol is applied, and wherein the route optimization device transmits information in which a home address and a care-of address of the first communication terminal are associated with each other, as the route optimization information to the second terminal repeater. In this configuration, even if the first communication terminal is a communication terminal to which the Mobile-IPv6 protocol is applied, the route between the first communication terminal and the second communication terminal is optimized.

A communication control method according to the present invention described in claim 6.

This communication control method is applied in the communication system applied to the second network and comprising the second terminal repeater, the location information management device, and the route optimization device. The route optimization device receives the route optimization information from the first communication terminal and also receives the location information of the second terminal repeater from the location information management device. Then the route optimization device transmits the route optimization information to the second terminal repeater, based on the location information of the second terminal repeater thus received, whereby the route optimization information is transmitted to the second terminal repeater to which the second communication terminal is connected. This enables the second terminal repeater to relay a packet transmitted and received between the first communication terminal and the second communication terminal, through an optimal route. Namely, the second terminal repeater rewrites at least one of a source address and a destination address in a header of each packet transmitted and received between the first communication terminal and the second communication terminal, whereby packets can be transferred directly to both the first and second communication terminals. In the communication control method according to the present invention, as described above, even in a case where the first communication terminal changes its first terminal repeater to another and where the second communication terminal is a terminal not interpreting the Mobile-IPv6 protocol, the second terminal repeater directly transfers the packet transmitted and received between the first communication terminal and the second communication terminal, so that the communication is always carried out through an optimized route.

Preferably, the communication system comprises a plurality of second terminal repeaters; a protocol of, even if the second communication terminal changes the second terminal repeater in connection to another, maintaining a communication state before the change is applied to the second network; the communication control method further comprises: a step wherein when the second terminal repeater is connected to the second communication terminal, the second terminal repeater transmits location update information containing its own location information to the location information management device; a step wherein when the location information management device receives the location update information from the second terminal repeater, the location information management device transmits the location update information to the route optimization device; and a step wherein when the route optimization device receives the location update information from the location information management device, the route optimization device transmits the route optimization information to the second terminal repeater having transmitted the location update information. In this case, even if the second communication terminal changes its second terminal repeater to another, the second terminal repeater directly transfers the packet transmitted and received between the first communication terminal and the second communication terminal, whereby the first communication terminal and the second communication terminal can always perform the communication through the optimized route.

Preferably, the communication system comprises a boundary transfer device placed at a boundary location between the first network and the second network, and the communication control method further comprises: a step wherein the route optimization device encapsulates a packet to be transmitted to the first communication terminal; and a step wherein the boundary transfer device decapsulates the packet encapsulated by the route optimization device. In this case, the packet transmission from the route optimization device to the boundary transfer device can be carried out more securely.

Preferably, when receiving the route optimization information from the first communication terminal, the route optimization device receives the route optimization information via the boundary transfer device which receives the route optimization information transmitted from the first communication terminal and which transfers the route optimization information to the route optimization device. In this case, it is feasible to significantly avoid a situation in which the route optimization information arrives at the route optimization device through a redundant route.

Preferably, when receiving the route optimization information from the first communication terminal, the route optimization device receives the route optimization information via the second terminal repeater which receives the route optimization information transmitted from the first communication terminal and which transfers the route optimization information to the route optimization device. In this case, even if the route optimization information is transmitted to the second communication terminal, the route optimization device can receive the route optimization information with certainty.

Preferably, the first communication terminal is a communication terminal to which the Mobile-IPv6 protocol is applied, and the route optimization device transmits information in which a home address and a care-of address of the first communication terminal are associated with each other, as the route optimization information to the second terminal repeater. In this case, even if the first communication terminal is a communication terminal to which the Mobile-IPv6 protocol is applied, the route is optimized between the first communication terminal and the second communication terminal.

The present invention provides the communication system and the communication control method capable of maintaining the optimized communication route upon connection with an external network.

The present invention will become more fully understood from the detailed description given herein below and the accompanying drawings which are given by way of illustration only, and thus are not to be considered as limiting the present invention.
Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is an illustration showing a network to which a communication system according to an embodiment of the present invention is applied.
Fig. 2 is an illustration showing connection relations between the network shown in Fig. 1 and external networks.
Fig. 3 is an illustration showing a communication system 32 applied to a network.
Fig. 4 is an illustration showing a schematic configuration of a Binding information notification message.
Fig. 5 is an illustration showing information stored in a location information management server 20.
Fig. 6 is an illustration showing a schematic configuration of a location information notification message.
Fig. 7 is an illustration showing Binding information created and stored in a route optimization server 18.
Fig. 8 is an illustration showing information stored in an access router.
Fig. 9 is a sequence diagram showing a communication control method of a communication system according to an embodiment of the present invention.
Fig. 10 is an illustration showing a state in which a communication terminal has moved.

### DESCRIPTION OF THE PREFERRED EMBODIMENTS

Preferred embodiments of the communication system and the communication control method according to the present invention will be described below in detail with reference to the accompanying drawings. The same or equivalent elements will be denoted by the same reference symbols and redundant description will be omitted.

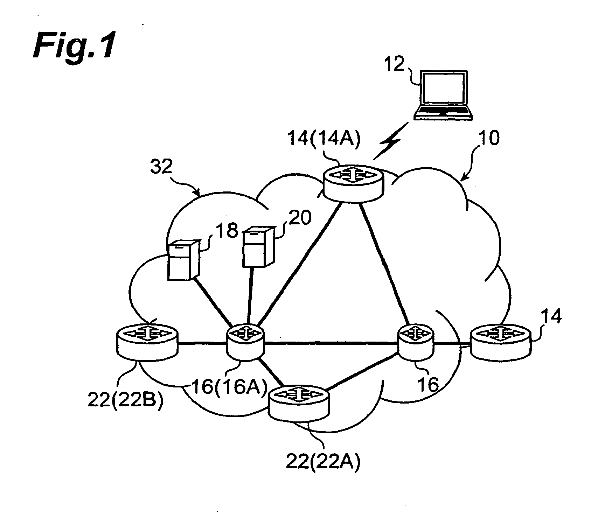

Fig. 1 is an illustration showing a network to which a communication system according to an embodiment of the present invention is applied. This network (second network) 10 is mainly comprised of a plurality of access routers (second terminal repeaters) 14 for a communication terminal (second communication terminal) 12 to be connected, a plurality of routers 16 forming the network 10, a route optimization server (route optimization device) 18 connected to one router 16A out of the plurality of routers 16, a location information management server (location information management device) 20 connected to the router 16A as the route optimization server 18 is, and a plurality of boundary transfer devices 22 as gateways to external networks described later.

The network 10 is a network supporting the IPv6 protocol. The network 10 is also a network to which the IP square technology is applied, and adopts a predetermined mobility support protocol of, even if the communication terminal 12 changes its access router 14 in connection to another, maintaining a communication state before the change. The communication terminal 12 connected to this network 10 does not support the Mobile-IPv6 protocol and is thus unable to make an appropriate response when receiving information specific to the Mobile-IPv6 protocol.

The plurality of access routers 14 are devices to perform wireless or wired communication with the communication terminal 12, and are configured to transmit location update information to the location information management server 20 upon a connection with the communication terminal 12. This location update information contains information (location information of the communication terminal 12) comprised of an address of an access router itself and identification information (e.g., an IP address and a MAC address) of the communication terminal 12 connected to the access router 14. This access router 14 can appropriately change a source address and a destination address in a header of a packet to be transferred. When the location information management server 20 receives the location update information from the access router 14A to which the communication terminal 12 is connected (the access router 14A in connection will be referred to hereinafter as a "connected access router"), it writes the newly received location update information over location update information stored before the reception thereof. In this manner the location update information is transmitted from new access router 14 to the location information management server 20 every time the communication terminal 12 changes its access router 14 to another. Therefore, the location information management server 20 always stores the address of the connected access router 14A to which the communication terminal 12 is presently in connection. It permits the location information management server 20 to manage the current location of the communication terminal 12 in the network 10.

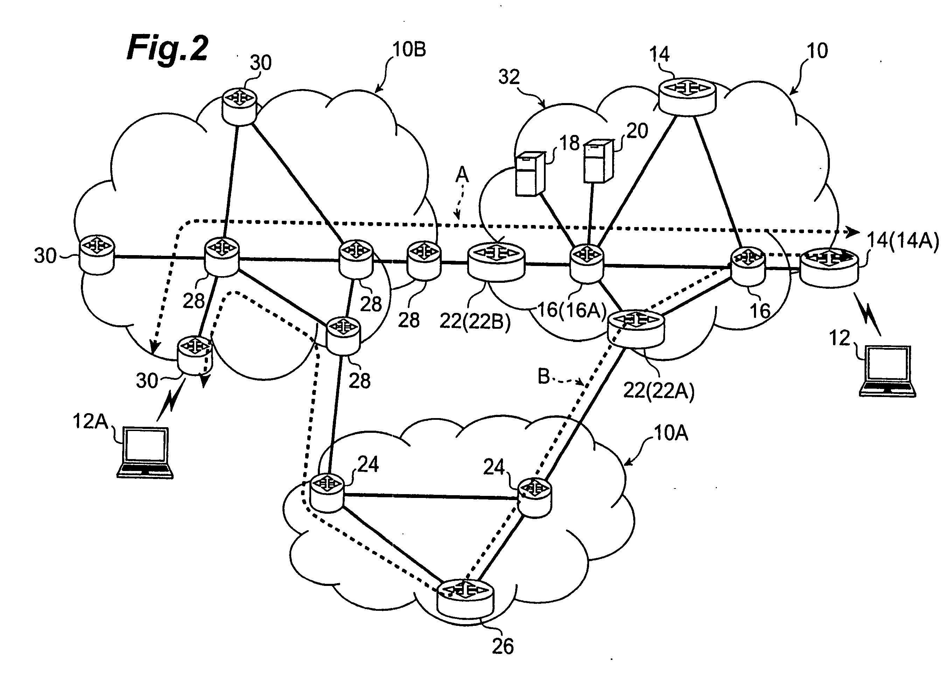

The boundary transfer devices 22 are devices mediating between network 10 and external networks different from the network 10, and the network 10 is connected through two boundary transfer devices 22A, 22B to a first external network 10A and to a second external network (first network) 10B, respectively. The external networks will be described below with reference to Fig. 2. Fig. 2 is an illustration showing connection relations between network 10 shown in Fig. 1 and external networks 10A, 10B.

The first external network 10A and second external network 10B both are networks which support the IPv6 protocol, and to which a Mobile IPv6-compatible terminal 12A (hereinafter referred to as a "Mobile-IP terminal") can be connected. The first external network 10A is a home network of the Mobile-IP terminal 12A, and the second external network 10B a network that the Mobile-IP terminal 12A is visiting (foreign network). Namely, the first external network 10A has a home agent 26 of the Mobile-IP terminal 12A, in addition to a plurality of routers 24 forming the network. On the other hand, the second external network 10B connected to the first external network 10A has a plurality of access routers (first terminal repeaters) 30 for the Mobile-IP terminal (first communication terminal) 12A to be connected, in addition to routers 28 forming the network.

In the Mobile-IPv6 protocol, the Mobile-IP terminal 12A exchanges keys for authentication of a BU message by use of the technique called Return Routability, prior to transmission of the BU message containing information (route optimization information) in which a home address and a care-of address of the Mobile-IP terminal 12A (location information of the Mobile-IP terminal 12A) are associated with each other, to a correspondent terminal. More specifically, the Mobile-IP terminal 12A transmits a Home Test Init message (hereinafter referred to as a "HoTI message") via the home agent to the correspondent terminal and also transmits a Care-of Test Init message (hereinafter referred to as a "CoTI message") directly to the correspondent terminal. When the correspondent terminal is a terminal capable of interpreting the Mobile-IPv6 protocol, the correspondent terminal creates a Node Key and a Nonce, and returns a Home Test message (hereinafter referred to as a "HoT message") as a response to the HoTI message and a Care-of Test message (hereinafter referred to as a "CoT message") as a response to the CoTI message to the Mobile-IP terminal 12A.

When receiving the HoT message and the CoT message, the Mobile-IP terminal 12A creates a key for authentication of Binding Update and sends a BU message to the correspondent terminal. Receiving the BU message, the correspondent terminal confirms the validity of the BU message by the aforementioned Node Key and Nonce, and thereafter creates and stores Binding information containing information in which the home address and the care-of address of the Mobile-IP terminal 12A are associated with each other, based on the BU message. By this, communication through an optimal route can be maintained between the Mobile-IP terminal 12A and the correspondent terminal even if the Mobile-IP terminal 12A connected to the external network 10B changes its access router 30 to another by sending the BU message to the correspondent.

However, the communication terminal 12 connected to the network 10 does not support the Mobile-IPv6 protocol, as described above. For this reason, in communication with the Mobile-IP terminal 12A, the communication terminal 12 is unable to exchange the aforementioned keys based on Return Routability, and thus the Mobile-IP terminal 12A transmits no BU message to the communication terminal 12. Therefore, without any countermeasures, it will result in performing the communication through a redundant communication route via home agent 26 (cf. arrow B in Fig. 2) between communication terminal 12 and Mobile-IP terminal 12A. In this case, the communication will cause the increase in packet transfer delay and jitter.

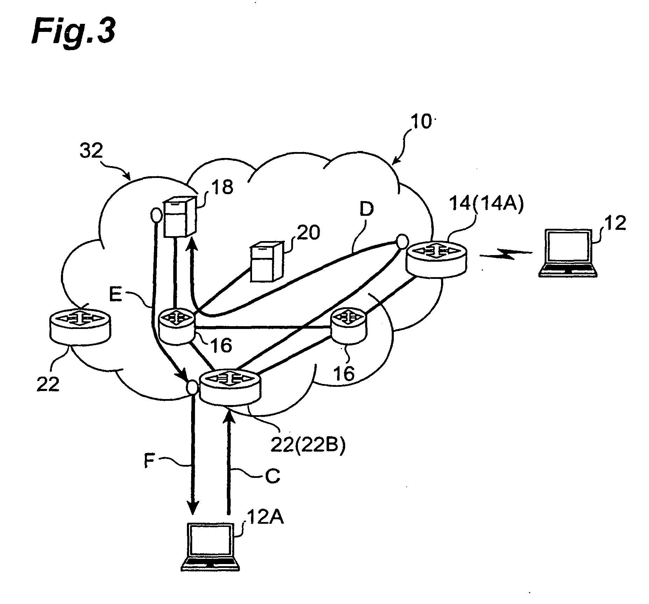

Therefore, the Inventors conducted elaborate research and discovered the technology for permitting even the communication terminal 12 not interpreting the Mobile-IPv6 protocol to communicate with the Mobile-IP terminal 12A through an optimal communication route (cf. arrow A in Fig. 2). Namely, the communication system 32 applied to the network 10 has the aforementioned access routers 14, route optimization server 18, location information management server 20, and boundary transfer devices 22. The communication system 32 applied to the network 10 will be described below with reference to Fig. 3.

The access router 14 judges the HoTI message and the CoTI message sent from the Mobile-IP terminal 12A, from the headers of the packets. When receiving these messages, the access router 14 then encapsulates them and transfers them to the route optimization server 18. The access router 14 also judges the BU message sent from the Mobile-IP terminal 12A, from the header of the packet. When receiving this BU message, the access router 14 then encapsulates it and transfers it to the route optimization server 18.

When receiving the encapsulated HoTI message and CoTI message from the access router 14, the route optimization server 18 decapsulates them and creates a Node Key and a Nonce. Then the route optimization server 18 creates a HoT message and a CoT message with the source address of the header being the address of the communication terminal 12, and transmits them to the Mobile-IP terminal 12A. When receiving the encapsulated BU message from the access router 14, the route optimization server 18 decapsulates it, creates and stores Binding information, and properly transmits a Binding information notification message containing information in which the home address and the care-of address of the Mobile-IP terminal 12A are associated with each other, as created based on the Binding information, to the connected access router 14A. The transmission of the Binding information notification message is carried out based on the location information of the connected access router 14A included in the location update information transmitted from the location information management server 20.

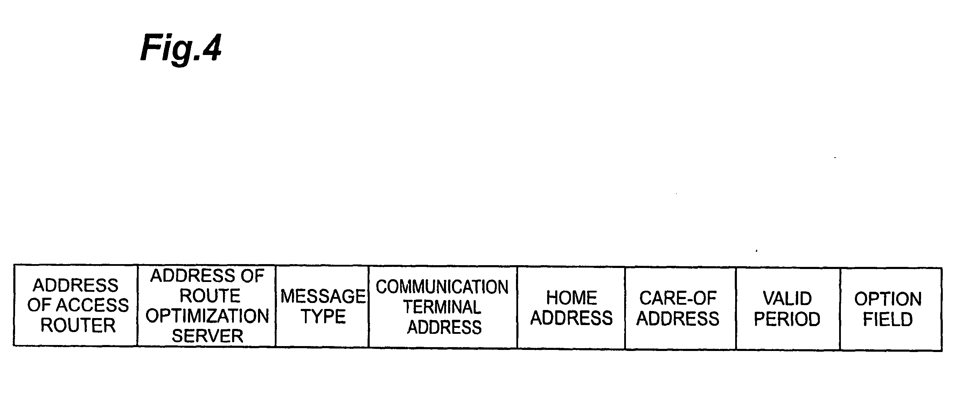

The Binding information notification message, as shown in Fig. 4, has a header portion composed of an address of connected access router 14A, an address of route optimization server 18, and a message type; and a data portion composed of an address of communication terminal 12 connected to access router 14, a home address and a care-of address of Mobile-IP terminal 12A, a valid time period of the entry, and an option field. The message type is data indicating that this message is a Binding information notification message and contains instruction data such as new creation, update, or deletion to the access router 14. The option field is a data area to which attendant information can be added.

The connected access router 14A stores this Binding information notification message and, based on this Binding information notification message, it converts a packet with the source address being the care-of address of Mobile-IP terminal 12A to a packet with the source address being the home address of Mobile-IP terminal 12A and sends the packet to the communication terminal 12 in connection to the Mobile-IP terminal 12A. When the packet transmitted from the Mobile-IP terminal 12A is given a home address option used in the Mobile-IPv6 protocol, the connected access router 14A checks the presence/absence thereof and thereafter forwards the packet to the communication terminal 12. The connected access router 14A modifies a packet received from the communication terminal 12 in communication with the Mobile-IP terminal 12A so as to change the destination address to the care-of address of Mobile-IP terminal 12A, gives the packet a routing header used in the Mobile-IPv6 protocol, and forwards the packet to the Mobile-IP terminal 12A.

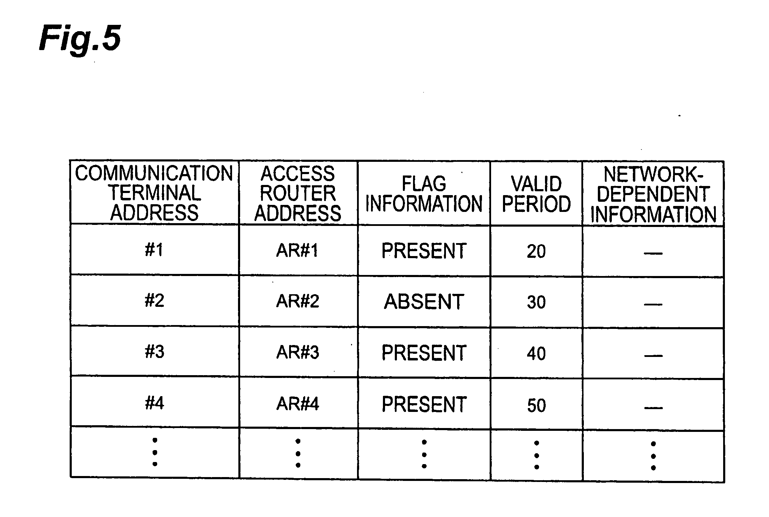

As described above, the access router 14 transmits the location update information to location information management server 20 at a time of a connection with the communication terminal 12. It results in storing the various information shown in Fig. 5, into the location information management server 20. Namely, the location information management server 20 stores information comprised of "communication terminal address" being an address of communication terminal 12, "access router address" being an address of connected access router 14A corresponding to communication terminal 12, "flag information" indicating a connection situation with Mobile-IP terminal 12A, "valid time period," and "network-dependent information." It is then seen from the information shown in Fig. 5 that communication terminals 12 with addresses of "#1," #3," and "#4" are in connection with respective access routers 14 with addresses of "AR#1," "AR#3," and "AR#4" and that each terminal 12 is in communication with one of Mobile-IP terminals 12A located in the second external network 10B.

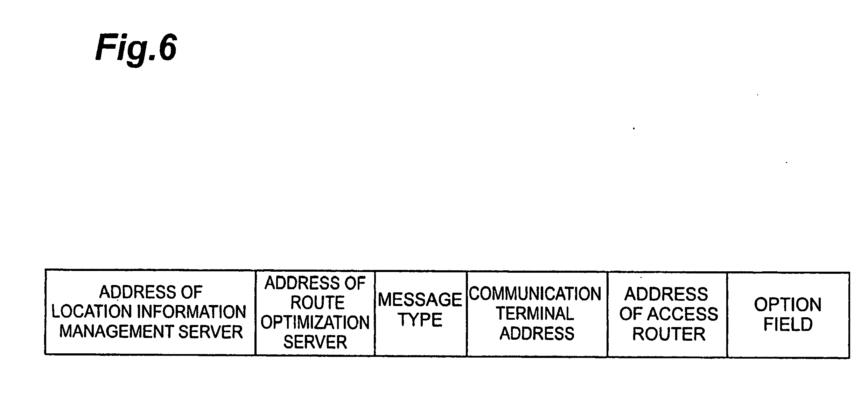

Upon a request from route optimization server 18 or upon reception of location update information from connected access router 14, the location information management server 20 transmits a location information notification message to route optimization server 18. This location information notification message, as shown in Fig. 6, is comprised of an address of location information management server 20, an address of route optimization server 18, a message type, an address of communication terminal 12 as a communication terminal address, an address of connected access router 14A in connection with communication terminal 12 as an access router address, and an option field. The message type is data indicating that this message is a location information notification message, and further contains data indicating a type of the message such as an inquiry response or a location information change notification to the route optimization server 18. The option field is a data area to which attendant information can be added.

The flow of information in the network 10 to which the communication system 32 is applied will be described below in detail.

First, during communication between Mobile-IP terminal 12A and communication terminal 12 through a redundant route, the Mobile-IP terminal 12A transmits a HoTI message and a CoTI message with the source address of the header being the address of the Mobile-IP terminal 12A (a home address or a care-of address) and with the destination address being the address of the communication terminal 12, via a boundary transfer device 22 to the communication terminal 12 being a correspondent terminal (cf. arrow C in Fig. 3). Since the HoTI message contains the address of home agent 26 designated as a repeater address in the header, it is routed from the Mobile-IP terminal 12A via the home agent 26 to the communication terminal 12. The HoTI message and CoTI message are received by the connected access router 14A, and these messages are encapsulated and forwarded to the route optimization server 18 (cf. arrow D in Fig. 3). In the headers of the encapsulated HoTI message and CoTI message, the source address is the address of the connected access router 14A and the destination address the address of the route optimization server 18.

When the route optimization server 18 receives the encapsulated HoTI message and CoTI message, the route optimization server 18 decapsulates them and generates a Node Key and a Nonce conforming to the Mobile-IPv6 protocol. Then the route optimization server 18 creates a HoT message and a CoT message being responses to the HoTI message and the CoTI message. The source address of packets of these messages is the address of the communication terminal 12 and the destination address the address of the Mobile-IP terminal 12A (the home address or the care-of address). The route optimization server 18 encapsulates the packets of the created messages and transmits them to the boundary transfer device 22 (cf. arrow E in Fig. 3). In the headers of the encapsulated packets, the source address is the address of the route optimization server 18 and the destination address the address of the boundary transfer device 22. This packet encapsulation allows the packets to be transmitted more securely from the route optimization server 18 to the boundary transfer device 22.

The boundary transfer device 22, which relays the aforementioned HoT message and CoT message transmitted from the route optimization server 18 to the Mobile-IP terminal 12A, decapsulates the HoT message and CoT message encapsulated by the route optimization server 18. Then the boundary transfer device 22 transmits the HoT message and CoT message with the source address of the header being the address of the communication terminal 12 and with the destination address being the address of the Mobile-IP terminal 12A (the home address or the care-of address), to the Mobile-IP terminal 12A (cf. arrow F in Fig. 3)

In this communication system 32, as described above, the route optimization server 18, instead of the communication terminal 12 being a communication partner of the Mobile-IP terminal 12A, returns the HoT message and CoT message being responses to the HoTI message and CoTI message, to the Mobile-IP terminal 12A. Then the Mobile-IP terminal 12A, receiving these HOT message and CoT message, generates the key for authentication of Binding Update.

Thereafter, the Mobile-IP terminal 12A transmits a BU message to the communication terminal 12. This BU message is received by the connected access router 14A and the message is encapsulated and forwarded to the route optimization server 18. In the header of the encapsulated BU message, the source address is the address of the connected access router 14A, and the destination address the address of the route optimization server 18. When the route optimization server 18 receives the encapsulated BU message, the route optimization server 18 decapsulates it and checks the validity of the BU message by use of the aforementioned Node Key and Nonce. When the BU message is judged as an authorized one, the route optimization server 18 creates Binding information from the BU message and stores it.

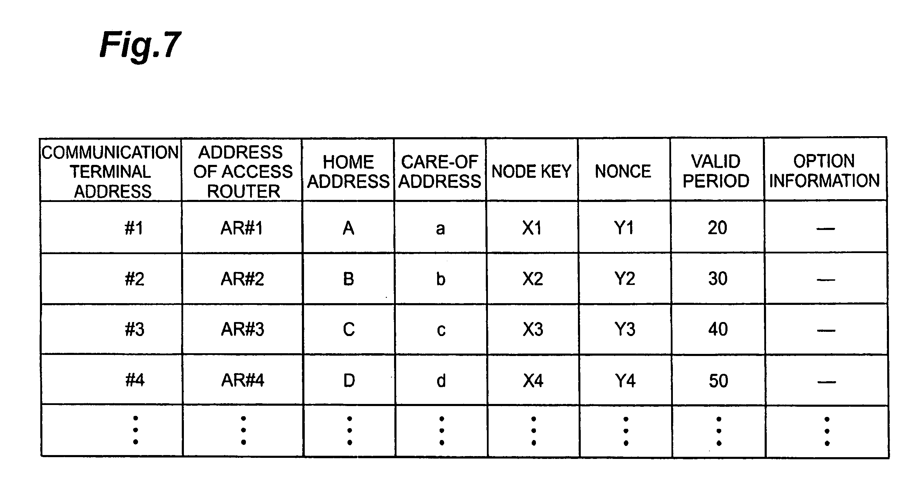

The Binding information created and stored in the route optimization server 18 will be described below with reference to Fig. 7. Fig. 7 is an illustration showing the Binding information created and stored in the route optimization server 18.

As shown in Fig. 7, the route optimization server 18 stores as the Binding information, information comprised of "communication terminal address" being an address of communication terminal 12, "access router address" being an address of connected access router 14A corresponding to the communication terminal 12, "home address" being a home address of Mobile-IP terminal 12A as a communication partner of the communication terminal 12, "care-of address" being a care-of address of the same Mobile-IP terminal 12A, "Node Key" and "Nonce" generated upon creation of the HoT message and CoT message, "valid time period" being an effective time limit of this entry, and "option information." Namely, it is seen from the information shown in Fig. 7 that the communication terminal 12 with the address of "#1" is in connection with the access router 14 with the address of "AR#1" and that the home address of Mobile-IP terminal 12A being a communication partner of this communication terminal 12 is "A" and the care-of address thereof is "a." It is also seen that upon reception of the HoTI message and CoTI message from this Mobile-IP terminal 12A, the route optimization server 18 generated "X1" as a Node Key and "Y1" as a Nonce and holds them. The "communication terminal address," "access router address," "Node Key," and "Nonce" are acquired when the route optimization server 18 receives the HoTI message and CoTI message from the Mobile-IP terminal 12A. The "home address," "care-of address," and "valid time period" are acquired when the route optimization server 18 receives the BU message from the Mobile-IP terminal 12A and completes the confirmation of validity of the BU message, and these information elements are stored in a corresponding entry.

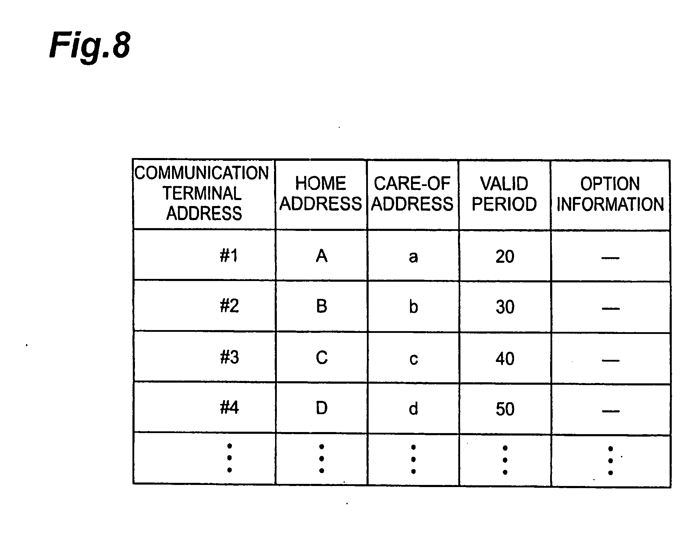

Thereafter, the route optimization server 18 transmits the aforementioned Binding information notification message to the access router 14 connected to the communication terminal 12 in communication with the Mobile-IP terminal 12A having transmitted the BU message. Information elements stored in this access router 14 are, as shown in Fig. 8, "communication terminal address" being an address of communication terminal 12, "home address" being a home address of Mobile-IP terminal 12A, "care-of address" being a care-of address of Mobile-IP terminal 12A, a valid time period of this entry, and option information.

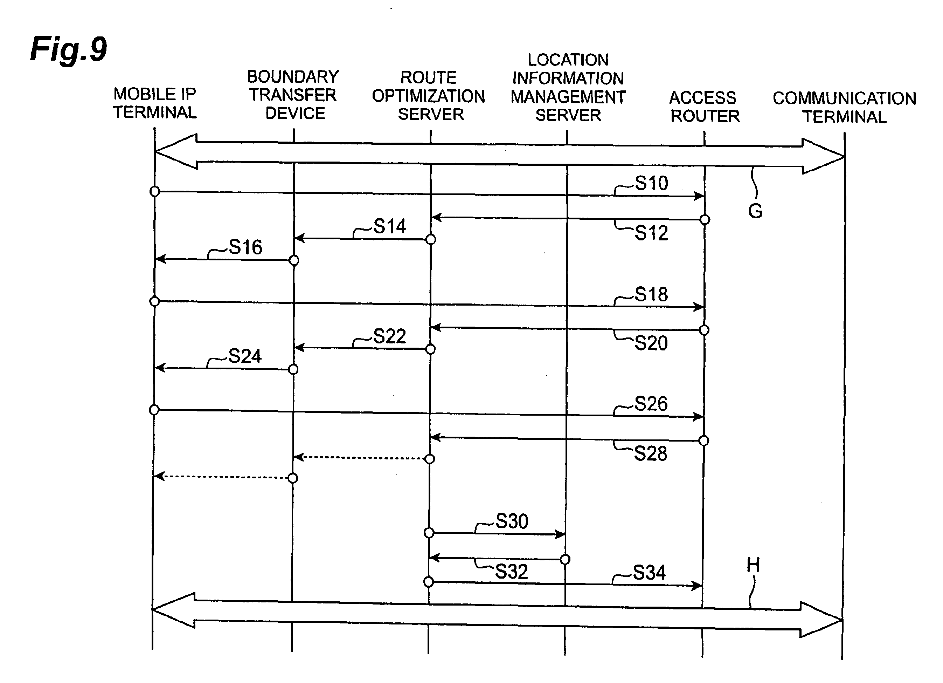

Next, a communication control method associated with the communication system 32 detailed above will be described below with reference to Fig. 9. Fig. 9 is a sequence diagram showing the communication control method of communication system 32.

First, during communication through a redundant route between a Mobile-IP terminal 12A and a communication terminal 12 (cf. arrow G in Fig. 9), the Mobile-IP terminal 12A transmits a HoTI message to the communication terminal 12 (S10). A connected access router 14A receives this HoTI message and forwards it to route optimization server 18 (S12). The route optimization server 18, receiving the HoTI message, creates a HoT message with the source address of the packet being the address of the communication terminal 12 and with the destination address being the home address of the Mobile-IP terminal 12A, encapsulates it, and forwards the encapsulated message to a predetermined boundary transfer device 22 (S14). The boundary transfer device 22 decapsulates the HoT message received from the route optimization server 18 and forwards the HoT message via home agent 26 to the Mobile-IP terminal 12A within the area of the second external network 10B (S16).

The Mobile-IP terminal 12A transmits a CoTI message to the communication terminal 12 (S18). The connected access router 14A receives this CoTI message and forwards it to the route optimization server 18 (S20). The route optimization server 18, receiving the CoTI message, creates a CoT message with the source address of the packet being the address of the communication terminal 12 and with the destination address being the care-of address of the Mobile-IP terminal 12A, encapsulates it, and forwards the encapsulated message to the predetermined boundary transfer device 22 (S22). The boundary transfer device 22 decapsulates the CoT message received from the route optimization server 18 and forwards the CoT message to the Mobile-IP terminal 12A within the area of the second external network 10B (S24).

Receiving the HoT message and the CoT message, the Mobile-IP terminal 12A transmits a BU message to the communication terminal 12 (S26). The connected access router 14A receives this BU message and forwards it to the route optimization server 18 (S28). The route optimization server 18, receiving the BU message, creates and stores Binding information in which the home address and the care-of address of the Mobile-IP terminal 12A are associated with each other, based on the BU message. Thereafter, the route optimization server 18 sends an inquiry request for a location information notification message to the location information management server 20 (S30), and acquires the location information notification message from the location information management server 20 (S32). When the route optimization server 18 sends the request for the location information notification message to the location information management server 20, the location information management server 20 changes the flag information of the corresponding communication terminal 12 to "present." Then the route optimization server 18 transmits a Binding information notification message to the connected access router 14A of the communication terminal 12 (S34).

When the connected access router 14A receives the Binding information notification message, this connected access router 14A becomes able to relay a packet transmitted and received between the Mobile-IP terminal 12A and the communication terminal 12 through an optimal route. Namely, the connected access router 14A rewrites an address of each packet transmitted and received between the Mobile-IP terminal 12A and the communication terminal 12, so as to directly forward packets to both the Mobile-IP terminal 12A and the communication terminal 12 (cf. arrow H in Fig. 9). In other words, the Mobile-IP terminal 12A and the communication terminal 12 perform direct communication, using the care-of address at the present time of the Mobile-IP terminal 12A and the address at the present time of the communication terminal 12 (cf. arrow A in Fig. 2). As described previously, the connected access router 14A rewrites the source address of a packet with the source address being the care-of address of the Mobile-IP terminal 12A, to the home address of the Mobile-IP terminal 12A and also rewrites the destination address of a packet with the destination address being the home address of the Mobile-IP terminal 12A, to the care-of address of the Mobile-IP terminal 12A, based on the received Binding information notification message.

In a case where the Mobile-IP terminal 12A changes its link to another access router 30, the Mobile-IP terminal 12A sends a BU message to the communication terminal 12. In the same manner as in the above-described mode, the connected access router 14A receives this BU message and forwards it to the route optimization server 18, and the route optimization server 18 transmits a Binding information notification message with the message type of update to the connected access router 14A. The connected access router 14A directly transfers each packet transmitted and received between the communication terminal 12 and the Mobile-IP terminal 12A, based on the Binding information notification message. Therefore, even in the case where the Mobile-IP terminal 12A changes its link, the communication is maintained through the optimal route between the communication terminal 12 and the Mobile-IP terminal 12A without switching to the route via home agent 26. During the period between reception of the BU message and reception of the Binding information notification message at the connected access router 14A, the connected access router 14A is unable to perform the address transformation of packet, but packet loss can be avoided by countermeasures such as buffering of packet.

As detailed above, the communication system 32 applied in the network 10 is provided with the access routers 14, location information management server 20, and route optimization server 18. The route optimization server 18 receives the BU message from Mobile-IP terminal 12A and receives the location information of connected access router 14A from the location information management server 20. Then the route optimization server 18 transmits the BU message to the connected access router 14A, based on the received location information of connected access router 14A, to notify the connected access router 14A to which the communication terminal 12 is connected, of the route optimization information. This enables the connected access router 14A to relay a packet transmitted and received between the Mobile-IP terminal 12A and the communication terminal 12. Therefore, the connected access router 14A directly forwards the packet transmitted and received between the communication terminal 12 and the Mobile-IP terminal 12A, so that communication is always performed through the optimized route. This achieves improvements in the problems such as packet loss, and increase of packet transfer delay and jitter, as compared with the conventional communication system involving switching to the redundant route via HA every time the Mobile-IP terminal 12A changes its access router 30 to another. Since the access router 14 forwards the BU message to the route optimization server 18, the route optimization server 18 can receive the BU message with certainty.

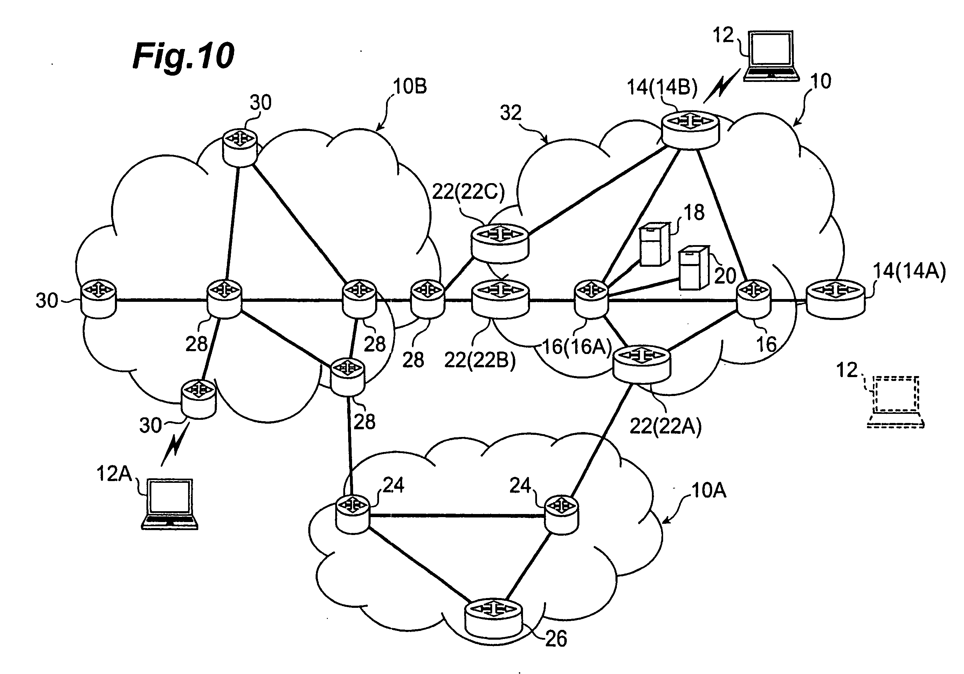

Next, a case where the communication terminal 12 has changed its connected access router 14 to another will be described with reference to Fig. 10. Fig. 10 is an illustration showing a state in which the communication terminal 12 has moved. A situation in which the communication terminal 12 first connected to the access router 14A has changed its link to another access router 14B, as shown in Fig. 10, will be described as an example. With this movement of the communication terminal 12, the boundary transfer device 22B used for access to the network 10B is assumed to be switched over to another boundary transfer device 22C.

When the communication terminal 12 changes its link from access router 14A to access router 14B, the access router 14B transmits the location update information to the location information management server 20. When the location information management server 20 receives the location update information and when the flag information of the communication terminal 12 corresponding to the location update information is "present," it transmits the aforementioned location information notification message to the route optimization server 18 and to the boundary transfer device 22. This makes the boundary transfer device 22 forward a packet transmitted from the external networks 10A, 10B as addressed to the communication terminal 12, to the access router 14B. The route optimization server 18 transmits a Binding information notification message with the message type of new creation to the access router 14B. This causes the access router 14B to directly forward a packet transmitted and received between the communication terminal 12 and the Mobile-IP terminal 12A, in the same manner as in the aforementioned mode, whereby the communication is maintained through an optimized route. Since in the communication system 32 there is no need for storage of Binding information of Mobile-IP terminal 12A in the boundary transfer devices 22, even with a switchover between boundary transfer devices due to movement of communication terminal 12 the communication is maintained through an optimal route between communication terminal 12 and Mobile-IP terminal 12A, without switching to the route via the home agent 26. It is preferable to transmit a Binding information notification message with the message type of deletion to the access router 14A as occasion may demand.

The present invention is not limited to the above embodiments, but can be modified in various ways. For example, the communication terminal connected to the external network may be any terminal adopting a protocol of maintaining the communication state before a change when the communication terminal changes its terminal repeater in connection to another, without having to be limited to Mobile-IPv6; for example, the communication terminal may be a terminal to which the technology such as Mobile-IPv4 or IP square is applied.

The present invention may also be applied to a scheme in which, instead of the connected access router 14A, the boundary transfer device 22 receives the HoTI message and CoTI message, and the BU message and forwards these messages to the route optimization server 18. In this case, the route of the messages to the route optimization server 18 becomes shorter than the route via the connected access router 14A. The present invention may also be applied to a scheme in which a router (e.g., router 16 in Fig. 1) other than the access routers receives the HoTI message and CoTI message, and the BU message and forwards these messages to the route optimization server.

Furthermore, the route optimization server and the location information management server do not always have to be constructed as separate components, but can also be integrated with each other as occasion may demand.

From the invention thus described, it will be obvious that the embodiments of the invention may be varied in many ways.

## Claims

1. A communication system (32) applied to a second network (10) connected to a first network (10B) which has a plurality of first terminal repeaters (30) for a first communication terminal (12A) to be connected, and to which a protocol of, even if the first communication terminal (12A) changes the first terminal repeater (30) in connection to another, maintaining a communication state before the change is applied, the communication system (32) comprising:
a second terminal repeater (14) to which a second communication terminal (12) not interpreting the Mobile-IPv6 protocol is connected;
a location information management device (20) for storing location information of the second terminal repeater (14) to which the second communication terminal (12) is connected; and
a route optimization device (18) for receiving the location information of the second terminal repeater (14), which is transmitted from the location information management device (20), and for receiving route optimization information containing location information of the first communication terminal (12A), which is transmitted from the first communication terminal (12A);
wherein the route optimization device (18) transmits the route optimization information received from the first communication terminal (12A) to the second terminal repeater (14), based on the location information of the second terminal repeater (14) received from the location information management device (20), and wherein the second terminal repeater (14) relays a packet transmitted and received between the first communication terminal (12A) and the second communication terminal, based on the location information of the first communication terminal in the route optimization information received from the route optimization device (18)
**characterized in that**
the communication system comprises a plurality of said second terminal repeaters (14),
wherein a protocol of, even if the second communication terminal (12) changes the second terminal repeater (14) in connection to another, maintaining a communication state before the change is applied to the second network (10),
wherein when the second terminal repeater (14) is connected to the second communication terminal (12), said second terminal repeater (14) transmits location update information containing its own location information to the location information management device (20),
wherein the location information management device (20) transmits the location update information received from the second terminal repeater (14) to the route optimization device (18), and
wherein when the route optimization device (18) receives the location update information from the location information management device (20), the route optimization device (18) transmits the route optimization information to the second terminal repeater (14) having transmitted the location update information.

2. The communication system (32) according to Claim 1, further comprising a boundary transfer device (22) placed at a boundary location between the first network (10B) and the second network (10),
wherein the boundary transfer device (22) decapsulates an encapsulated packet which the route optimization device (18) transmits to the first communication terminal (12A).

3. The communication system (32) according to Claim 2, wherein the boundary transfer device (22) receives the route optimization information transmitted from the first communication terminal (12A) and transfers the route optimization information to the route optimization device (18), and
wherein the route optimization device (18) receives the route optimization information from the first communication terminal (12A) via the boundary transfer device (22).

4. The communication system (32) according to Claim 1, wherein the second terminal repeater (14) receives the route optimization information transmitted from the first communication terminal (12A) and transfers the route optimization information to the route optimization device (18), and
wherein the route optimization device (18) receives the route optimization information from the first communication terminal (12A) via the second terminal repeater (14).

5. The communication system (32) according to Claim 1, wherein the first communication terminal (12A) is a communication terminal to which the Mobile-IPv6 protocol is applied, and
wherein the route optimization device (18) transmits information in which a home address and a care-of address of the first communication terminal (12A) are associated with each other, as the route optimization information to the second terminal repeater (14).

6. A communication control method applied in a communication system (32) applied to a second network (10) connected to a first network (10B) which has a plurality of first terminal repeaters (30) for a first communication terminal (12A) to be connected, and to which a protocol of, even if the first communication terminal (12A) changes the first terminal repeater (30) in connection to another, maintaining a communication state before the change is applied, the communication system (32) comprising:
a second terminal repeater (14) to which a second communication terminal (12) not interpreting the Mobile-IPv6 protocol is applied;
a location information management device (20) for storing location information of the second terminal repeater (14) to which the second communication terminal (12) is connected; and
a route optimization device (18) for receiving the location information of the second terminal repeater (14), which is transmitted from the location information management device (20), and for receiving route optimization information containing location information of the first communication terminal (12A), which is transmitted from the first communication terminal (12A);
the communication control method comprising:
a step wherein the location information management device (20) transmits the location information of the second terminal repeater (14) in storage to the route optimization device (18);
a step wherein the route optimization device (18) receives the location information of the second terminal repeater (14) from the location information management device (20);
a step wherein the route optimization device (18) receives the route optimization information transmitted from the first communication terminal (12A);
a step wherein the route optimization device (18) transmits the route optimization information received from the first communication terminal (12A) to the second terminal repeater (14), based on the location information of the second terminal repeater (14) received from the location information management device (20); and
a step wherein the second terminal repeater (14) relays a packet transmitted and received between the first communication terminal (12A) and the second communication terminal (12), based on the location information of the first communication terminal (12A) in the route optimization information received from the route optimization device (18),
**characterized in that**
the communication system (32) comprises a plurality of said second terminal repeaters (14), and wherein a protocol of, even if the second communication terminal (12) changes the second terminal repeater (14) in connection to another, maintaining a communication state before the change is applied to the second network (10), the communication control method further comprising:
a step wherein when the second terminal repeater (14) is connected to the second communication terminal (12), the second terminal repeater (14) transmits location update information containing its own location information to the location information management device (20);
a step wherein when the location information management device (20) receives the location update information from the second terminal repeater (14), the location information management device (20) transmits the location update information to the route optimization device (18); and
a step wherein when the route optimization device (18) receives the location update information from the location information management device (20), the route optimization device (18) transmits the route optimization information to the second terminal repeater (14) having transmitted the location update information.

7. The communication control method according to Claim 6, wherein the communication system (32) comprises a boundary transfer device (22) placed at a boundary location between the first network (10B) and the second network (10),
the communication control method further comprising:
a step wherein the route optimization device (18) encapsulates a packet to be transmitted to the first communication terminal (12A); and
a step wherein the boundary transfer device (22) decapsulates the packet encapsulated by the route optimization device (18).

8. The communication control method according to Claim 7, wherein, when receiving the route optimization information from the first communication terminal (12A), the route optimization device (18) receives the route optimization information via the boundary transfer device (22) which receives the route optimization information transmitted from the first communication terminal (12A) and which transfers the route optimization information to the route optimization device (18).

9. The communication control method according to Claim 6, wherein, when receiving the route optimization information from the first communication terminal (12A), the route optimization device (18) receives the route optimization information via the second terminal repeater (14) which receives the route optimization information transmitted from the first communication terminal (12A) and which transfers the route optimization information to the route optimization device (18).

10. The communication control method according to Claim 6, wherein the first communication terminal (12A) is a communication terminal to which the Mobile-IPv6 protocol is applied, and
wherein the route optimization device (18) transmits information in which a home address and a care-of address of the first communication terminal (12A) are associated with each other, as the route optimization information to the second terminal repeater (14).

## Patentansprüche

1. Ein Kommunikations-System (32), angewendet auf ein zweites Netzwerk (10), verbunden mit einem ersten Netzwerk (10B), welches eine Mehrzahl von Erstes-Endgerät-Wiederholern (30) für ein erstes zu verbindendes Kommunikations-Endgerät (12A) hat, und auf welches ein Protokoll des, selbst falls das erste Kommunikations-Endgerät (12A) den Erstes-Endgerät-Wiederholer (30) in Verbindung zu einem anderen ändert, Beibehaltens eines Kommunikationszustandes vor der Änderung angewendet wird, das Kommunikations-System (32) aufweisend:
• einen Zweites-Endgerät-Wiederholer (14), mit welchem ein zweites das Mobile-IPv6-Protokoll nicht interpretierende Kommunikationsendgerät (12) verbunden ist;
• eine Orts-Information-Verwaltungs-Einrichtung (20) zum Speichern von Orts-Information des Zweites-Endgerät-Wiederholers (14), mit welchem das zweite Kommunikations-Endgerät (12) verbunden ist; und
• eine Routen-Optimierungs-Einrichtung (18) zum Empfangen der Orts-Information des Zweites-Endgerät-Wiederholers (14), welche übertragen wird von der Orts-Information-Verwaltungs-Einrichtung (20), und zum Empfangen von Routen-Optimierungs-Information enthaltend Orts-Information des ersten Kommunikations-Endgeräts (12A), welche übertragen wird von dem ersten Kommunikations-Endgerät (12A);
• wobei die Routen-Optimierungs-Einrichtung (18) die von dem ersten Kommunikations-Endgerät (12A) empfangene Routen-Optimierungs-Information zu dem Zweites-Endgerät-Wiederholer (14) übertragt, basierend auf der Orts-Information des Zweites-Endgerät-Wiederholers (14), empfangen von der Orts-Informations-Verwaltungs-Einrichtung (20), und wobei der Zweites-Endgerät-Wiederholer (14) ein zwischen dem ersten Kommunikations-Endgerät (12A) und dem zweiten Kommunikations-Endgerät übertragenes und empfangenes Paket weiterleitet, basierend auf der Orts-Information des ersten Kommunikations-Endgeräts in der von der Routen-Optimierungs-Einrichtung (18) empfangenen Routen-Optimierungs-Information
**gekennzeichnet dadurch, dass**
• das Kommunikations-System eine Mehrzahl der Zweites-Endgerät-Wiederholer (14) aufweist,
• wobei ein Protokoll des, selbst falls das zweite Kommunikations-Endgerät (12) den Zweites-Endgerät-Wiederholer (14) in Verbindung zu einem anderen ändert, Beibehaltens eines Kommunikationszustandes vor der Änderung angewendet wird auf das zweite Netzwerk (10),
• wobei, wenn der Zweites-Endgerät-Wiederholer (14) mit dem zweiten Kommunikations-Endgerät (12) verbunden ist, der Zweites-Endgerät-Wiederholer (14) Orts-Aktualisierungs-Information enthaltend seine eigene Orts-Information an die Orts-Information-Verwaltungs-Einheit (20) überträgt,
• wobei die Orts-Information-Verwaltungs-Einheit (20) die von dem Zweites-Endgerät-Wiederholer (14) empfangene Orts-Aktualisierungs-Information zu der Routen-Optimierungs-Einrichtung (18) überträgt, und
• wobei, wenn die Routen-Optimierungs-Einrichtung (18) die Orts-Aktualisierungs-Information von der Orts-Information-Verwaltungs-Einrichtung (20) empfängt, die Routen-Optimierungs-Einrichtung (18) die Routen-Optimierungs-Information zu dem Zweites-Endgerät-Wiederholer (14), der die Orts-Aktualisierungs-Information übertragen hat, überträgt.

2. Das Kommunikations-System (32) gemäß Anspruch 1,
ferner aufweisend eine Grenz-Übertragungs-Einrichtung (22) platziert an einem Grenz-Ort zwischen dem ersten Netzwerk (10B) und dem zweiten Netzwerk (10), wobei die Grenz-Übertragungs-Einrichtung (22) ein eingekapseltes Paket, welches die Routen-Optimierungs-Einrichtung (18) zu dem ersten Kommunikations-Endgerät (12A) überträgt, entkapselt.

3. Das Kommunikations-System (32) gemäß Anspruch 2,
wobei die Grenz-Übertragungs-Einrichtung (22) die von dem ersten Kommunikations-Endgerät (12A) übertragene Routen-Optimierungs-Information empfängt und die Routen-Optimierungs-Information zu der Routen-Optimierungs-Einrichtung (18) überträgt, und
wobei die Routen-Optimierungs-Einrichtung (18) die Routen-Optimierungs-Information von dem ersten Kommunikations-Endgerät (12A) über die Grenz-Übertragungs-Einrichtung (22) empfängt.

4. Das Kommunikations-System (32) gemäß Anspruch 1,
wobei der Zweites-Endgerät-Wiederholer (14) die von dem ersten Kommunikations-Endgerät (12A) übertragene Routen-Optimierungs-Information empfängt und die Routen-Optimierungs-Information zu der Routen-Optimierungs-Einrichtung (18) überträgt, und
wobei die Routen-Optimierungs-Einrichtung (18) die Routen-Optimierungs-Information von dem ersten Kommunikations-Endgerät (12A) über den Zweites-Endgerät-Wiederholer (14) empfängt.

5. Das Kommunikations-System (32) gemäß Anspruch 1,
wobei das erste Kommunikations-Endgerät (12A) ein Kommunikations-Endgerät ist, auf das das Mobile-IPv6-Protokoll angewendet wird, und
wobei die Routen-Optimierungs-Einrichtung (18) Information, in der eine Heimat-Adresse und eine care-of-Adresse des ersten Kommunikations-Endgeräts (12A) mit einander verknüpft sind, als die Routen-Optimierungs-Information zu dem Zweites-Endgerät-Wiederholer (14) überträgt.

6. Ein Kommunikations-Kontroll-Verfahren, angewendet in einem Kommunikations-System (32), angewendet auf ein zweites Netzwerk (10), verbunden mit einem ersten Netzwerk (10B), welches eine Mehrzahl von Erstes-Endgerät-Wiederholern (30) für ein erstes zu verbindendes Kommunikations-Endgerät (12A) hat, und auf welches ein Protokoll des, selbst falls das erste Kommunikations-Endgerät (12A) den Erstes-Endgerät-Wiederholer (30) in Verbindung zu einem anderen ändert, Beibehaltens eines Kommunikationszustandes vor der Änderung angewendet wird, das Kommunikations-System (32) aufweisend:
• einen Zweites-Endgerät-Wiederholer (14), mit welchem ein zweites das Mobile-IPv6-Protokoll nicht interpretierende Kommunikationsendgerät (12) verbunden ist;
• eine Orts-Information-Verwaltungs-Einrichtung (20) zum Speichern von Orts-Information des Zweites-Endgerät-Wiederholers (14), mit welchem das zweite Kommunikations-Endgerät (12) verbunden ist; und
• eine Routen-Optimierungs-Einrichtung (18) zum Empfangen der Orts-Information des Zweites-Endgerät-Wiederholers (14), welche übertragen wird von der Orts-Information-Verwaltungs-Einrichtung (20), und zum Empfangen von Routen-Optimierungs-Information enthaltend Orts-Information des ersten Kommunikations-Endgeräts (12A), welche übertragen wird von dem ersten Kommunikations-Endgerät (12A); das Kommunikations-Kontroll-Verfahren aufweisend:
• einen Schritt, in dem die Orts-Informations-Verwaltungs-Einrichtung (20) die Orts-Information zu dem Zweites-Endgerät-Wiederholer (14) im Speicher zu der Routen-Optimierungs-Einrichtung (18) überträgt;
• einen Schritt, in dem die Routen-Optimierungs-Einrichtung (18) die Orts-Information des Zweites-Endgerät-Wiederholers (14) von der Orts-Information-Verwaltungs-Einrichtung (20) empfängt;
• einen Schritt, in dem die Routen-Optimierungs-Einrichtung (18) die von dem ersten Kommunikations-Endgerät (12A) übertragene Routen-Optimierungs-Information empfängt;
• einen Schritt, in dem die Routen-Optimierungs-Einrichtung (18) die von dem ersten Kommunikations-Endgerät (12A) empfangene Routen-Optimierungs-Information zu dem Zweites-Endgerät-Wiederholer (14) übertragt, basierend auf der Orts-Information des Zweites-Endgerät-Wiederholers (14), empfangen von der Orts-Informations-Verwaltungs-Einrichtung (20); und
• einen Schritt, in dem der Zweites-Endgerät-Wiederholer (14) ein zwischen dem ersten Kommunikations-Endgerät (12A) und dem zweiten Kommunikations-Endgerät (12) übertragenes und empfangenes Paket weiterleitet, basierend auf der Orts-Information des ersten Kommunikations-Endgeräts (12A) in der von der Routen-Optimierungs-Einrichtung (18) empfangenen Routen-Optimierungs-Information,
**gekennzeichnet dadurch, dass**
• das Kommunikations-System (32) eine Mehrzahl der Zweites-Endgerät-Wiederholer (14) aufweist, und wobei ein Protokoll des, selbst falls das zweite Kommunikations-Endgerät (12) den Zweites-Endgerät-Wiederholer (14) in Verbindung zu einem anderen ändert, Beibehaltens eines Kommunikationszustandes vor der Änderung angewendet wird auf das zweite Netzwerk (10),
das Kommunikations-Kontroll-Verfahren ferner aufweisend:
• einen Schritt, in dem der Zweites-Endgerät-Wiederholer (14) mit dem zweiten Kommunikations-Endgerät (12) verbunden ist, der Zweites-Endgerät-Wiederholer (14) Orts-Aktualisierungs-Information enthaltend seine eigene Orts-Information zu der Orts-Information-Verwaltungs-Einheit (20) überträgt,
• einen Schritt, in dem, wenn die Orts-Information-Verwaltungs-Einrichtung (20) die Orts-Aktualisierungs-Information von dem Zweites-Endgerät-Wiederholer (14) empfängt, die Orts-Information-Verwaltungs-Einheit (20) die Orts-Aktualisierungs-Information zu der Routen-Optimierungs-Einrichtung (18) überträgt, und
• einen Schritt, in dem, wenn die Routen-Optimierungs-Einrichtung (18) die Orts-Aktualisierungs-Information von der Orts-Information-Verwaltungs-Einrichtung (20) empfängt, die Routen-Optimierungs-Einrichtung (18) die Routen-Optimierungs-Information zu dem Zweites-Endgerät-Wiederholer (14), der die Orts-Aktualisierungs-Information übertragen hat, überträgt.

7. Das Kommunikations-Kontroll-Verfahren gemäß Anspruch 6,
wobei das Kommunikations-System (32) aufweist eine Grenz-Übertragungs-Einrichtung (22) platziert an einem Grenz-Ort zwischen dem ersten Netzwerk (10B) und dem zweiten Netzwerk (10),
das Kommunikations-Kontroll-Verfahren ferner aufweisend: einen Schritt, in dem die Routen-Optimierungs-Einrichtung (18) ein zu dem ersten Kommunikations-Endgerät (12A) zu übertragendes Paket einkapselt; und einen Schritt, in dem die Grenz-Übertragungs-Einrichtung (22) das von der die Routen-Optimierungs-Einrichtung (18) eingekapselte Paket entkapselt.

8. Das Kommunikations-Kontroll-Verfahren gemäß Anspruch 7,
wobei, wenn sie die Routen-Optimierungs-Information von dem ersten Kommunikations-Endgerät (12A) empfängt, die Routen-Optimierungs-Einrichtung (18) die Routen-Optimierungs-Information über die Grenz-Übertragungs-Einrichtung (22), welche die von dem ersten Kommunikations-Endgerät (12A) übertragene Routen-Optimierungs-Information empfängt und welche die Routen-Optimierungs-Information zu der Routen-Optimierungs-Einrichtung (18) überträgt, empfängt.

9. Das Kommunikations-Kontroll-Verfahren gemäß Anspruch 6,
wobei, wenn sie die Routen-Optimierungs-Information von dem ersten Kommunikations-Endgerät (12A) empfängt, die Routen-Optimierungs-Einrichtung (18) die Routen-Optimierungs-Information über den Zweites-Endgerät-Wiederholer (14), welcher die von dem ersten Kommunikations-Endgerät (12A) übertragene Routen-Optimierungs-Information empfängt und welcher die Routen-Optimierungs-Information zu der Routen-Optimierungs-Einrichtung (18) überträgt, empfängt.

10. Das Kommunikations-Kontroll-Verfahren gemäß Anspruch 6,
wobei das erste Kommunikations-Endgerät (12A) ein Kommunikations-Endgerät ist, auf das das Mobile-IPv6-Protokoll angewendet wird, und
wobei die Routen-Optimierungs-Einrichtung (18) Information, in der eine Heimat-Adresse und eine care-of-Adresse des ersten Kommunikations-Endgeräts (12A) mit einander verknüpft sind, als die Routen-Optimierungs-Information zu dem Zweites-Endgerät-Wiederholer (14) überträgt.

## Revendications

1. Système de communication (32) appliqué à un deuxième réseau (10) connecté à un premier réseau (10B) qui présente une pluralité de premiers répéteurs d'extrémité de ligne (30) pour un premier terminal de réseau (12A) à connecter, et auquel est appliqué, même si le premier terminal de réseau (12A) change de premier répéteur d'extrémité de ligne (30) par rapport à un autre, un protocole de mise à jour d'un état de communication avant le changement, le système de communication (32) comprenant :
un deuxième répéteur d'extrémité de ligne (14) auquel est connecté un deuxième terminal de réseau (12) qui n'interprète pas le protocole Mobile - IPv6 ;
un dispositif de gestion d'informations d'emplacement (20) destiné à stocker des informations d'emplacement du deuxième répéteur d'extrémité de ligne (14) auquel est connecté le deuxième terminal de réseau (12) ; et
un dispositif d'optimisation de route (18) destiné à recevoir les informations d'emplacement du deuxième répéteur d'extrémité de ligne (14), qui sont transmises par le dispositif de gestion d'informations d'emplacement (20), et destiné à recevoir des informations d'optimisation de route qui contiennent les informations d'emplacement du premier terminal de réseau (12A), qui sont transmises par le premier terminal de réseau (12A) ;
dans lequel le dispositif d'optimisation de route (18) transmet les informations d'optimisation de route reçues en provenance du premier terminal de réseau (12A) vers le deuxième répéteur d'extrémité de ligne (14), sur la base des informations d'emplacement du deuxième répéteur d'extrémité de ligne (14) reçues en provenance du dispositif de gestion d'informations d'emplacement (20), et dans lequel le deuxième répéteur d'extrémité de ligne (14) relaie un paquet transmis et reçu entre le premier terminal de réseau (12A) et le deuxième terminal de réseau, sur la base des informations d'emplacement du premier terminal de réseau dans les informations d'optimisation de route reçues en provenance du dispositif d'optimisation de route (18) ;
**caractérisé en ce que :**
le système de communication comprend une pluralité de dits deuxièmes répéteurs d'extrémité de ligne (14) ;
dans lequel, même si le deuxième terminal de réseau (12) change de deuxième répéteur d'extrémité de ligne (14) par rapport à un autre, un protocole de mise à jour d'un état de communication avant le changement, est appliqué au deuxième réseau (10) ;
dans lequel lorsque le deuxième répéteur d'extrémité de ligne (14) est connecté au deuxième terminal de réseau (12), ledit deuxième répéteur d'extrémité de ligne (14) transmet des informations de mise à jour d'emplacement qui contiennent ses propres informations d'emplacement, au dispositif de gestion d'informations d'emplacement (20) ;
dans lequel le dispositif de gestion d'informations d'emplacement (20) transmet les informations de mise à jour d'emplacement reçues en provenance du deuxième répéteur d'extrémité de ligne (14) au dispositif d'optimisation de route (18);et
dans lequel lorsque le dispositif d'optimisation de route (18) reçoit les informations de mise à jour d'emplacement en provenance du dispositif de gestion d'informations d'emplacement (20), le dispositif d'optimisation de route (18) transmet les informations d'optimisation de route au deuxième répéteur d'extrémité de ligne (14) qui a transmis les informations de mise à jour d'emplacement.

2. Système de communication (32) selon la revendication 1, comprenant en outre un dispositif de transfert de frontière (22) placé au niveau d'un emplacement de frontière situé entre le premier réseau (10B) et le deuxième réseau (10) ;
dans lequel le dispositif de transfert de frontière (22) décapsule un paquet encapsulé que le dispositif d'optimisation de route (18) transmet au premier terminal de réseau (12A).

3. Système de communication (32) selon la revendication 2, dans lequel le dispositif de transfert de frontière (22) reçoit les informations d'optimisation de route transmises par le premier terminal de réseau (12A) et transfère les informations d'optimisation de route au dispositif d'optimisation de route (18) ; et
dans lequel le dispositif d'optimisation de route (18) reçoit des informations d'optimisation de route en provenance du premier terminal de réseau (12A) par l'intermédiaire du dispositif de transfert de frontière (22).

4. Système de communication (32) selon la revendication 1, dans lequel le deuxième répéteur d'extrémité de ligne (14) reçoit les informations d'optimisation de route transmises par le premier terminal de réseau (12A) et transfère les informations d'optimisation de route au dispositif d'optimisation de route (18) ; et
dans lequel le dispositif d'optimisation de route (18) reçoit des informations d'optimisation de route en provenance du premier terminal de réseau (12A) par l'intermédiaire du deuxième répéteur d'extrémité de ligne (14).

5. Système de communication (32) selon la revendication 1, dans lequel le premier terminal de réseau (12A) est un terminal de réseau auquel le protocole Mobile - IPv6 est appliqué ; et
dans lequel le dispositif d'optimisation de route (18) transmet des informations dans lesquelles une adresse locale et une adresse temporaire du premier terminal de réseau (12A) sont associées l'une à l'autre, comme informations d'optimisation de route, au deuxième répéteur d'extrémité de ligne (14).

6. Procédé de contrôle de communication appliqué dans un système de communication (32) appliqué à un deuxième réseau (10) connecté à un premier réseau (10B) qui présente une pluralité de premiers répéteurs d'extrémité de ligne (30) pour un premier terminal de réseau (12A) à connecter, et auquel est appliqué, même si le premier terminal de réseau (12A) change de premier répéteur d'extrémité de ligne (30) par rapport à un autre, un protocole de mise à jour d'un état de communication avant le changement, le système de communication (32) comprenant :
un deuxième répéteur de terminal (14) auquel est appliqué un deuxième terminal de réseau (12) qui n'interprète pas le protocole Mobile - IPv6 ;
un dispositif de gestion d'informations d'emplacement (20) destiné à stocker des informations d'emplacement du deuxième répéteur d'extrémité de ligne (14) auquel est connecté le deuxième terminal de réseau (12) ; et
un dispositif d'optimisation de route (18) destiné à recevoir les informations d'emplacement du deuxième répéteur d'extrémité de ligne (14), qui sont transmises par le dispositif de gestion d'informations d'emplacement (20), et destiné à recevoir des informations d'optimisation de route qui contiennent les informations d'emplacement du premier terminal de réseau (12A), qui sont transmises par le premier terminal de réseau (12A) ;
le procédé de contrôle de communication comprenant :
une étape dans laquelle le dispositif de gestion d'informations d'emplacement (20) transmet les informations d'emplacement du deuxième répéteur d'extrémité de ligne (14) stockées, au dispositif d'optimisation de route (18) ;
une étape dans laquelle le dispositif d'optimisation de route (18) reçoit les informations d'emplacement du deuxième répéteur d'extrémité de ligne (14) en provenance du dispositif de gestion d'informations d'emplacement (20) ;
une étape dans laquelle le dispositif d'optimisation de route (18) reçoit les informations d'optimisation de route transmises par le premier terminal de réseau (12A);
une étape dans laquelle le dispositif d'optimisation de route (18) transmet les informations d'optimisation de route reçues en provenance du premier terminal de réseau (12A), au deuxième répéteur d'extrémité de ligne (14), sur la base des informations d'emplacement du deuxième répéteur d'extrémité de ligne (14) reçues en provenance du dispositif de gestion d'informations d'emplacement (20) ; et
une étape dans laquelle le deuxième répéteur d'extrémité de ligne (14) relaie un paquet transmis et reçu entre le premier terminal de réseau (12A) et le deuxième terminal de réseau (12), sur la base des informations d'emplacement du premier terminal de réseau (12A) dans les informations d'optimisation de route reçues en provenance du dispositif d'optimisation de route (18) ;
**caractérisé en ce que :**
le système de communication (32) comprend une pluralité de dits deuxièmes répéteurs d'extrémité de ligne (14), et dans lequel, même si le deuxième terminal de réseau (12) change de deuxième répéteur d'extrémité de ligne (14) par rapport à un autre, un protocole de mise à jour d'un état de communication avant le changement, est appliqué au deuxième réseau (10), le procédé de contrôle de communication comprenant en outre :
une étape dans laquelle, lorsque le deuxième répéteur d'extrémité de ligne (14) est connecté au deuxième terminal de réseau (12), le deuxième répéteur d'extrémité de ligne (14) transmet des informations de mise à jour d'emplacement qui contiennent ses propres informations d'emplacement, au dispositif de gestion d'informations d'emplacement (20) ;
une étape dans laquelle, lorsque le dispositif de gestion d'informations d'emplacement (20) reçoit les informations de mise à jour d'emplacement en provenance du deuxième répéteur d'extrémité de ligne (14), le dispositif de gestion d'informations d'emplacement (20) transmet les informations de mise à jour d'emplacement au dispositif d'optimisation de route (18) ; et
une étape dans laquelle, lorsque le dispositif d'optimisation de route (18) reçoit les informations de mise à jour d'emplacement en provenance du dispositif de gestion d'informations d'emplacement (20), le dispositif d'optimisation de route (18) transmet les informations d'optimisation de route au deuxième répéteur d'extrémité de ligne (14) qui a transmis les informations de mise à jour d'emplacement.

7. Procédé de contrôle de communication selon la revendication 6, dans lequel le système de communication (32) comprend un dispositif de transfert de frontière (22) placé au niveau d'un emplacement de frontière situé entre le premier réseau (10B) et le deuxième réseau (10) ;
le procédé de contrôle de communication comprenant en outre :
une étape dans laquelle le dispositif d'optimisation de route (18) encapsule un paquet à transmettre au premier terminal de réseau (12A) ; et
une étape dans laquelle le dispositif de transfert de frontière (22) décapsule le paquet encapsulé par le dispositif d'optimisation de route (18).

8. Procédé de contrôle de communication selon la revendication 7, dans lequel, lors de la réception des informations d'optimisation de route en provenance du premier terminal de réseau (12A), le dispositif d'optimisation de route (18) reçoit les informations d'optimisation de route par l'intermédiaire du dispositif de transfert de frontière (22) qui reçoit les informations d'optimisation de route transmises par le premier terminal de réseau (12A) et qui transfère les informations d'optimisation de route au dispositif d'optimisation de route (18).

9. Procédé de contrôle de communication selon la revendication 6, dans lequel, lors de la réception des informations d'optimisation de route en provenance du premier terminal de réseau (12A), le dispositif d'optimisation de route (18) reçoit les informations d'optimisation de route par l'intermédiaire du deuxième répéteur d'extrémité de ligne (14) qui reçoit les informations d'optimisation de route transmises par le premier terminal de réseau (12A) et qui transfère les informations d'optimisation de route au dispositif d'optimisation de route (18).

10. Procédé de contrôle de communication selon la revendication 6, dans lequel le premier terminal de réseau (12A) est un terminal de réseau auquel le protocole Mobile - IPv6 est appliqué ; et
dans lequel le dispositif d'optimisation de route (18) transmet des informations dans lesquelles une adresse locale et une adresse temporaire du premier terminal de réseau (12A) sont associées l'une à l'autre, comme informations d'optimisation de route, au deuxième répéteur d'extrémité de ligne (14).
